# EUROPÄISCHE PATENTSCHRIFT

(11) **EP 2 053 252 B1**
(45) Veröffentlichungstag und Bekanntmachung des Hinweises auf die Patenterteilung: **27.11.2013**
(21) Anmeldenummer: 08017112.7
(22) Anmeldetag: 29.09.2008
(51) Int. Cl.: F15B 7/08, F16D 25/08

(54) **Hydraulikanordnung zum Ansteuern zumindest einer Komponente eines Fahrzeuges**
Hydraulic assembly for operating at least one component of a vehicle
Dispositif hydraulique destiné à la commande d'au moins un composant de véhicule

(30) Priorität: 25.10.2007 DE 102007051066
(43) Veröffentlichungstag der Anmeldung: 29.04.2009
(73) Patentinhaber: Schaeffler Technologies AG & Co. KG, 91074 Herzogenaurach (DE)
(72) Erfinder: Huang, Chao, 77815 Bühl (DE)

(56) Entgegenhaltungen:
- DE-A1- 3 149 628
- DE-A1- 10 351 907
- US-A- 4 162 616
- US-A- 4 510 752
- US-A1- 2004 007 125
- US-A1- 2004 178 038

## Beschreibung

Die vorliegende Erfindung betrifft eine Hydraulikanordnung zum Ansteuern zumindest einer Komponente eines Fahrzeuges gemäß dem Oberbegriff des Patentanspruchs 1. Insbesondere betrifft die vorliegende Erfindung eine Hydraulikanordnung mit einem Geberzylinder, der einen in seinem Gehäuse gebildeten Druckraum umfasst, in dem ein verschiebbarer Kolben bewegbar ist, wobei zur Begrenzung der Auszugbewegung des Kolbens zumindest ein Anschlag vorgesehen ist, der mit einem kolbenseitigen Anschlag zusammen wirkt.

Beispielsweise aus der Druckschrift DE 103 27 437 A1 ist ein hydraulisches System für ein Kraftfahrzeug bekannt, umfassend einen Geberzylinder mit einem Gehäuse und einem in diesem axial verschiebbar angeordneten Kolben. Der Kolben begrenzt einen mit einer Hydraulikflüssigkeit gefüllten Druckraum und wird bei Betätigung des Geberzylinders mittels einer auf den Kolben wirkenden Kolbenstange axial verschoben, wobei die Kolbenstange über ein Kugelgelenk mit dem Kolben verbunden ist. Der Druckraum des Geberzylinders wird ist über eine Druckleitung mit einem Nehmerzylinder verbunden. Mit dem Nehmerzylinder wird über eine Ausrückmechanik ein Ausrücker einer Kupplung betätigt.

Um die Bewegung des Kolbens begrenzen zu können, ist an der dem Kolben abgewandten Seite des Kugelgelenkes ein Anschlagteller angeordnet. Die Bewegung des Kolbens wird durch eine Halteklammer rückwärts begrenzt, indem der Anschlagteller an die Halteklammer anstößt. Auf diese Weise ist ein in Zugrichtung wirksamer Anschlag vorhanden. Die Halteklammer ist bei der bekannten Hydraulikanordnung an einem Schweißring befestigt. Der Schweißring wiederum nimmt den Kolben zur Axialführung auf und ist mit dem Gehäuse verschweißt.

Üblicherweise muss die Kolbenstange des Geberzylinders eine Auszugkraft von bis zu 1500 Newton übertragen. Diese Auszugkraft wird durch den Anschlag beziehungsweise die Halteklammer und den Schweißring auf das Gehäuse weitergeleitet. Deshalb muss die Schweißverbindung sehr robust bei der bekannten Hydraulikanordnung ausgeführt sein, damit eine Zerstörung dieser Verbindung bei extremen Pedalbetätigungen verhindert wird.

Ferner ergibt sich der Nachteil, dass aufgrund eventueller Bauraum- und Einbauanpassungen umfangreiche Änderungen an der Hydraulikanordnung erforderlich sind. Aufgrund der Verbindung einerseits zwischen dem Schweißring und dem Gehäuse sowie, andererseits zwischen den Schweißring und der Halteklammer sind Änderungen an zumindest den vorgenannten Bauteilen unvermeidbar. Dies erhöht die Herstellungskosten bei erforderlichen Anpassungen.

Eine Hydraulikanordnung gemäß dem Oberbegriff des Patentanspruchs 1 ist aus der DE 103 51 907 A1 bekannt.

Der vorliegenden Erfindung liegt die Aufgabe zu Grunde, eine Hydraulikanordnung der eingangs beschriebenen Gattung vorzuschlagen, welche einen möglichst sicheren Betrieb gewährleistet und bei der Bauraum- und Einbauanpassungen ohne umfangreiche Änderungen möglich sind.

Diese Aufgabe wird erfindungsgemäß durch die Merkmale des Patentanspruches 1 gelöst. Weitere vorteilhafte Ausgestaltungen ergeben sich aus den Unteransprüchen und der Zeichnung.

Somit wird eine Hydraulikanordnung zum Ansteuern zumindest einer Komponente, beispielsweise einer Kupplung eines Fahrzeuges mit einem Geberzylinder vorgeschlagen, der einen in seinem Gehäuse gebildeten Druckraum umfasst, in dem ein verschiebbarer Kolben (axial) bewegbar ist, wobei zur Begrenzung der Auszugbewegung des Kolbens zumindest ein Anschlag vorgesehen ist, welcher mit einem kolbenseitigen Anschlag zusammenwirkt, wobei das Gehäuse mehrteilig ausgebildet ist, wobei das einer Kolbenstange zugeordnete Gehäuseteil als gehäuseseitiger Anschlag vorgesehen ist. Aufgrund der Tatsache, dass das Gehäuse mehrteilig ausgebildet ist, wird die Auszugkraft zum Beispiel bei einem Pedalanschlag direkt von den Gehäuseteilen aufgenommen. Somit wird die Verbindung zwischen dem Schweißring und dem Gehäuse nicht mit der Auszugkraft beaufschlagt, so dass diese Verbindung nicht zusätzlich robust ausgestaltet werden muss. Zudem ergibt sich der Vorteil, dass der Schweißring als inneres Bauteil bei einer Bauraum- oder Einbauanpassung nicht angepasst werden muss. Daraus ergibt sich eine deutliche Reduzierung des erforderlichen Änderungsaufwandes, da lediglich die Gehäuseteile als Außenteile eventuell geändert werden.

Somit kann der Schweißring standardisiert werden, um somit Entwicklungskosten und Entwicklungszeit einsparen zu können. Eventuelle Änderungswünsche an dem Geberzylinder können schnell durchgeführt werden, weil nur das Gehäuse als Außenteil vorgesehen ist.

Das der Kolbenstange zugeordnete Gehäuseteil weist in radialer Richtung Ausnehmungen oder dergleichen zum Aufnehmen eines Halteelementes auf. Bei dieser Ausführungsvariante wird das Gehäuseteil mit einem zusätzlichen Halteelement verbunden, um gemeinsam den gehäuseseitigen Anschlagbereich zu bilden. Vorzugsweise kann sich das Halteelement in radialer Richtung durch das Gehäuse erstrecken. Es sind auch andere Anordnungsmöglichkeiten des Halteelementes bezogen auf das Gehäuse denkbar. Vorzugsweise kann das Halteelement in Ausnehmungen oder dergleichen des Gehäuses lösbar gehalten werden. Dabei können zum Beispiel formschlüssige oder auch kraftschlüssige Verbindungen verwendet werden.

Eine nächste mögliche Weiterbildung bei der Hydraulikanordnung kann vorsehen, dass das Halteelement vorzugsweise als etwa U-förmige Halteklammer oder dergleichen ausgebildet ist. Die Halteklammer kann beispielsweise radial durch das der Kolbenstange zugeordnete Gehäuseteil im Bereich der Kolbenstange gesteckt werden, um somit einen gehäuseseitigen Anschlagbereich für den Kolben zu bilden. Es sind auch andere Formen bei dem Halteelement denkbar.

Es ist beispielsweise möglich, dass die beiden Schenkel der U-förmigen Halteklammer einen Abstand zwischen einander aufweisen, der zumindest geringfügig kleiner als der Durchmesser eines als kolbenseitigen Anschlag ausgebildeten Anschlagtellers ist. Auf diese Weise bilden die beiden Schenkel einen gehäuseseitigen Anschlag für den Anschlagteller. Die Form des Anschlagtellers kann beliebig gewählt werden. Vorzugsweise kann der Anschlagteller an der Kolbenstange befestigt sein. Es sind auch andere Anordnungsmöglichkeiten des Anschlagtellers denkbar.

Gemäß einer nächsten Weiterbildung kann vorgesehen sein, dass der Abstand zumindest geringfügig größer als der Durchmesser der Kolbenstange ist. Somit kann die Kolbenstange ohne weiteres zwischen den Schenkeln der U-förmigen Halteklammer geführt werden.

Unabhängig von der jeweiligen Ausführungsvariante der Hydraulikanordnung kann vorgesehen sein, dass das der Kolbenstange zugeordnete Gehäuseteil als Deckel mit dem Gehäusegrundteil lösbar verbunden ist. Es ist auch denkbar, dass weitere Gehäuseteilen vorgesehen sind. Als lösbare Verbindung kann vorzugsweise eine Schnappringverbindung oder ein Bajonettverschluss vorgesehen sein. Es sind jedoch auch andere Verbindungsarten denkbar.

Die Hydraulikanordnung kann vorzugsweise zum Ansteuern einer Kupplung eingesetzt werden. Es sind jedoch auch andere Anwendungsmöglichkeiten denkbar.

Nachfolgend wird die Erfindung anhand der Zeichnungen näher erläutert.
Es zeigen:
- Fig.1: eine dreidimensionale Ansicht einer nicht erfindungsgemäßen Hydraulikanordnung;
- Fig.2: eine längs geschnittene Ansicht eines Geberzylinders der Hydraulikanordnung gemäß Figur 1;
- Fig.3: eine dreidimensionale Ansicht einer Ausführungsvariante einer Hydraulikanordnung; und
- Fig.4: eine längs geschnittene Ansicht eines Geberzylinders der Hydraulikanordnung gemäß Figur 3.

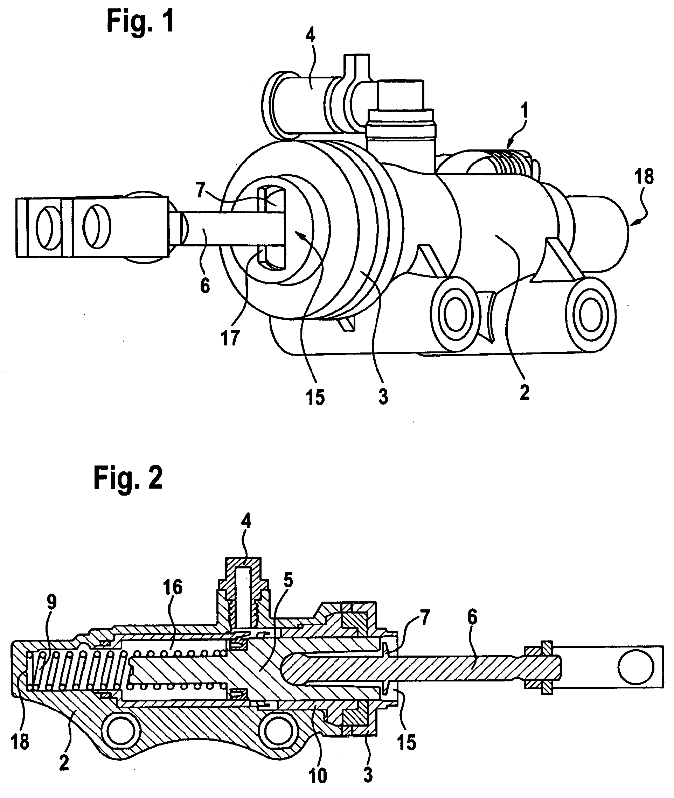

In den Figuren 1 und 2 sowie 3 und 4 ist jeweils eine Hydraulikanordnung zum Ansteuern beispielsweise einer Kupplung eines Fahrzeuges dargestellt. Die Hydraulikanordnung umfasst unabhängig von der jeweiligen Ausführungsvariante einen Geberzylinder 1, der ein mehrteiliges Gehäuse mit einem Gehäusegrundteil 2 und einem weiteren Gehäuseteil 3 als Deckel aufweist. Indem dem Gehäuse wird ein Druckraum 16 gebildet. An dem Gehäusegrundteil 2 ist ein Druckmittelanschluss 18 angeordnet, der mit einer nicht weiter dargestellten Druckmittelleitung verbunden ist, die zu einem ebenfalls nicht weiter dargestellten Nehmerzylinder zum Ansteuern der Kupplung führt. Das Gehäusegrundteil 2 und der Gehäuseteil 3 sind über eine lösbare Verbindung, z.B. über eine Schnappkreisverbindung oder einen Bajonettverschluss, miteinander verbunden. Der Anschlußstutzen 4 ist mit einem nicht dargestellten Druckmittelreservoir verbunden, aus dem Druckmittel nachlaufen kann.

In dem mit einer Hydraulikflüssigkeit gefüllten Druckraum 16 ist ein axial verschiebbarer Kolben 5 angeordnet. Bei Betätigung des Geberzylinders 1 wird der Kolben 5 über eine an dem Kolben 5 befestigten Kolbenstange 6 axial entgegen die Federkraft einer Rückstellfeder 9 verschoben, um einen entsprechenden Druck im Nehmerzylinder zur Ansteuerung der Kupplung aufzubringen. Die axiale Bewegung des Kolbens 5 wird durch einen Schweißring 10 unterstützt, der an dem Gehäuse 2 befestigt ist.

Zur Begrenzung der Auszugbewegung des Kolbens 5 ist z.B. an der Kolbenstange 6 ein Anschlagteller 7 als kolbenseitiger Anschlag angeordnet, der mit einem gehäuseseitigen Anschlag zusammenwirkt.

Bei der nicht erfindungsgemäßen Hydraulikanordnung gemäß der Figuren 1 und 2 wird der gehäuseseitige Anschlag durch einen Anschlagbereich 15 an dem Gehäuseteil 3 realisiert. Der axiale Anschlagbereich 15 korrespondiert zu dem als kolbenseitigen Anschlag ausgebildeten Anschlagteller 7, so dass die Rückzugbewegung des Kolbens 5 entsprechend begrenzt wird. Der Anschlagbereich 15 weist zudem eine axiale Durchführung 17 für die Kolbenstange 6 auf. Die Durchführung 17 ist als Schlitz ausgebildet, dessen Breite zumindest geringfügig größer als der Durchmesser der Kolbenstange 6 und zumindest geringfügig kleiner als der Durchmesser des Anschlagtellers 7 ist.

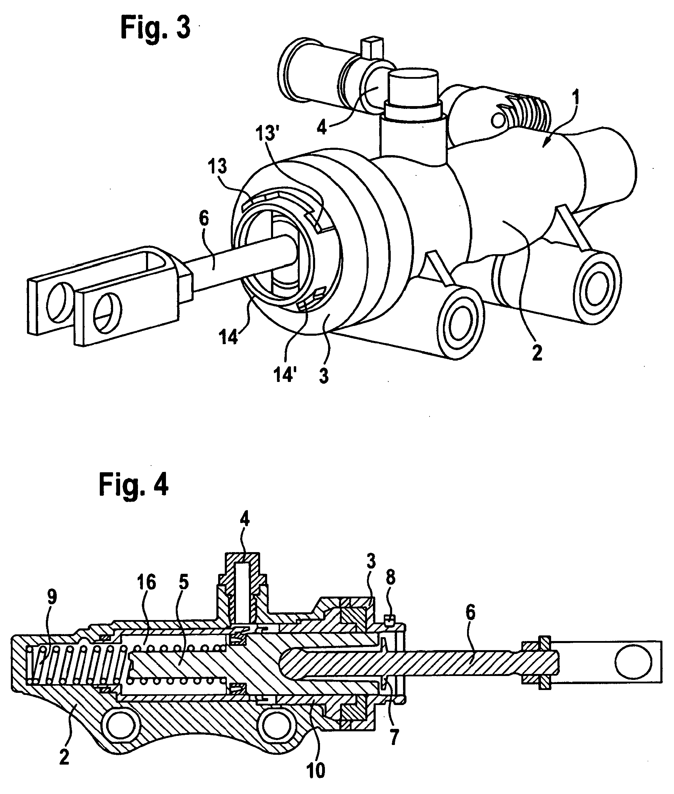

Der gehäuseseitige Anschlag wird bei der Ausführungsvariante gemäß den Figuren 3 und 4 durch ein Halteelement realisiert, welches mit dem Gehäuseteil 3 verbunden ist. Das Halteelement ist als etwa U-förmige Halteklammer 8 ausgebildet. Die Halteklammer 8 wird mit ihren Schenkeln durch entsprechende Ausnehmungen 13, 13'; 14, 14' an der Oberseite und an der Unterseite des Gehäuseteils 3 geführt, um radial durch das Gehäuseteil 3 zu verlaufen. Der Abstand zwischen den beiden Schenkeln ist zumindest geringfügig kleiner als der Durchmesser des Anschlagtellers 7, so dass die Auszugbewegung des Kolbens 5 begrenzt wird. Dabei ist der Abstand zwischen den beiden Schenkeln geringfügig größer als der Durchmesser der Kolbenstange 6, um es zu ermöglichen, dass die Kolbenstange 6 frei zwischen den Schenkeln durchführbar ist.

Bei der Hydraulikanordnung wird somit die Halteklammer 8 direkt mit dem Gehäuseteil 3 des Geberzylinders 1 verbunden, so dass die Auszugkraft bei Erreichen des Anschlages direkt von der Halteklammer 8 zum Gehäuse übertragen wird. Der Montageprozess wird dadurch kaum beeinflusst, da die Halteklammer 8 direkt in das Gehäuseteil 3 gesteckt wird.

Unabhängig von der jeweiligen Ausführungsvariante wird das als Deckel vorgesehene Gehäuseteil 3 über eine lösbare Verbindung an dem Gehäusegrundteil 2 befestigt.

### Bezugszeichenliste

- 1: Geberzylinder
- 2: Gehäusegrundteil
- 3: Gehäuseteil
- 4: Anschlußstutzen
- 5: Kolben
- 6: Kolbenstange
- 7: Anschlagteller
- 8: Halteklammer
- 9: Rückstellfeder
- 10: Schweißring
- 13, 13': Ausnehmungen an der Oberseite des Gehäuses
- 14, 14': Ausnehmungen an der Unterseite des Gehäuses
- 15: gehäuseseitiger Anschlagbereich
- 16: Druckraum
- 17: axiale Durchführung
- 18: Druckmittelanschluss

## Patentansprüche

1. Hydraulikanordnung zum Ansteuern zumindest einer Komponente eines Fahrzeuges, mit einem Geberzylinder (1), der einen in seinem Gehäuse gebildeten Druckraum (16) umfasst, in dem ein verschiebbarer Kolben (5) bewegbar ist, wobei zur Begrenzung der Auszugbewegung des Kolbens (5) zumindest ein Anschlag vorgesehen ist, welcher mit einem kolbenseitigen Anschlag zusammenwirkt, wobei das Gehäuse mehrteilig ausgebildet ist, und das einer Kolbenstange (6) zugeordnete Gehäuseteil (3) als gehäuseseitiger Anschlag vorgesehen ist, **dadurch gekennzeichnet, dass** das der Kolbenstange (6) zugeordnete Gehäuseteil (3) in radialer Richtung Ausnehmungen (13, 13'; 14, 14') zum Aufnehmen eines Halteelementes aufweist.

2. Hydraulikanordnung nach Anspruch 1, **dadurch gekennzeichnet, dass** das Halteelement als etwa U-förmige Halteklammer (8) ausgebildet ist.

3. Hydraulikanordnung nach Anspruch 2, **dadurch gekennzeichnet, dass** beide Schenkel der U-förmigen Halteklammer (8) mit dem Gehäuseteil (3) den gehäuseseitigen Anschlag für einen kolbenseitigen Anschlagteller (7) bilden.

4. Hydraulikanordnung nach einem der Ansprüche 3, **dadurch gekennzeichnet, dass** der Abstand zwischen den Schenkeln der U-förmigen Halteklammer (8) zumindest geringfügig kleiner als der Durchmesser des Anschlagtellers (7) ist.

5. Hydraulikanordnung nach einem der Ansprüche 2 bis 4, **dadurch gekennzeichnet, dass** der Abstand zwischen beiden Schenkeln der U-förmigen Halteklammer (8) zumindest geringfügig größer als der Durchmesser der Kolbenstange (6) ist.

6. Hydraulikanordnung nach einem der vorangehenden Ansprüche, **dadurch gekennzeichnet, dass** das der Kolbenstange (6) zugeordnete Gehäuseteil (3) als Deckel mit einem Gehäusegrundteil (2) lösbar verbunden ist.

7. Hydraulikanordnung nach Anspruch 6, **dadurch gekennzeichnet, dass** die lösbare Verbindung als eine Schnappringverbindung oder ein Bajonettverschluss ausgebildet ist.

## Claims

1. Hydraulic arrangement for operating at least one component of a vehicle, with a master cylinder (1) comprising a pressure space (16) which is formed in its housing and in which a displaceable piston (5) is movable, there being provided, for limiting the extension movement of the piston (5), at least one stop which cooperates with a piston-side stop, the housing being of multi-part form, and the housing part (3) assigned to a piston rod (6) being provided as a housing-side stop, **characterized in that** the housing part (3) assigned to the piston rod (6) has in the radial direction recesses (13, 13'; 14, 14') for receiving a holding element.

2. Hydraulic arrangement according to Claim 1, **characterized in that** the holding element is formed as an approximately U-shaped holding clip (8).

3. Hydraulic arrangement according to Claim 2, **characterized in that** the two legs of the U-shaped holding clip (8) form with the housing part (3) the housing-side stop for a piston-side stop plate (7).

4. Hydraulic arrangement according to Claim 3, **characterized in that** the distance between the legs of the U-shaped holding clip (8) is at least slightly smaller than the diameter of the stop plate (7).

5. Hydraulic arrangement according to one of Claims 2 to 4, **characterized in that** the distance between the two legs of the U-shaped holding clip (8) is at least slightly larger than the diameter of the piston rod (6).

6. Hydraulic arrangement according to one of the preceding claims, **characterized in that** the housing part (3) assigned to the piston rod (6) is releasably connected as a cover to a housing basic part (2).

7. Hydraulic arrangement according to Claim 6, **characterized in that** the releasable connection is formed as a snap ring connection or a bayonet fastening.

## Revendications

1. Agencement hydraulique pour la commande d'au moins un composant d'un véhicule, comprenant un maître-cylindre (1) qui comprend un espace de pression (16) formé dans son boîtier, dans lequel peut se déplacer un piston déplaçable (5), au moins une butée étant prévue pour limiter le mouvement de sortie du piston (5), laquelle coopère avec une butée du côté du piston, le boîtier étant réalisé en plusieurs parties et la partie de boîtier (3) associée à une tige de piston (6) étant prévue sous forme de butée du côté du boîtier, **caractérisé en ce que** la partie de boîtier (3) associée à la tige de piston (6) présente des évidements (13, 13' ; 14, 14') dans la direction radiale pour recevoir un élément de retenue.

2. Agencement hydraulique selon la revendication 1, **caractérisé en ce que** l'élément de retenue est réalisé sous forme de pince de retenue (8) ayant approximativement une forme en U.

3. Agencement hydraulique selon la revendication 2, **caractérisé en ce que** les deux branches de la pince de retenue (8) en forme de U forment avec la partie de boîtier (3) la butée du côté du boîtier pour un plateau de butée (7) du côté du piston.

4. Agencement hydraulique selon la revendication 3, **caractérisé en ce que** la distance entre les branches de la pince de retenue (8) en forme de U est au moins légèrement inférieure au diamètre du plateau de butée (7).

5. Agencement hydraulique selon l'une quelconque des revendications 2 à 4, **caractérisé en ce que** la distance entre les deux branches de la pince de retenue (8) en forme de U est au moins légèrement supérieure au diamètre de la tige de piston (6).

6. Agencement hydraulique selon l'une quelconque des revendications précédentes, **caractérisé en ce que** la partie de boîtier (3) associée à la tige de piston (6) est connectée de manière détachable en tant que couvercle à une partie de base de boîtier (2).

7. Agencement hydraulique selon la revendication 6, **caractérisé en ce que** la connexion détachable est réalisée sous forme de connexion par encliquetage ou de fermeture à baïonnette.
